# EUROPEAN PATENT APPLICATION

(11) **EP 4 826 953 A1**
(43) Date of publication of application: **21.10.2026**
(21) Application number: 24903436.4
(22) Date of filing: 15.11.2024
(51) Int. Cl.: H02J 7/10, H02J 7/00, H02J 7/04, H02J 50/12

(54) **POWER RECEIVING DEVICE**

(30) Priority: 13.12.2023 JP 2023209740
(71) Applicant: DENSO CORPORATION, Kariya-city, Aichi 448-8661 (JP)
(72) Inventor: TAKAHASHI, Masaya, Kariya- city, Aichi 4488661 (JP); NAKAYASHIKI, Yusei, Kariya- city, Aichi 4488661 (JP); YAMAGUCHI, Nobuhisa, Kariya- city, Aichi 4488661 (JP)
(74) Representative: TBK
(86) International application number: PCT/JP2024/040610
(87) International publication number: WO 2025/126776

(57) **Abstract**

A power receiving device (100) configured to receive a first AC power in a non-contact manner includes a first resonant circuit (110), a power conversion circuit (120), a battery (130), a second resonant circuit (140) connected to an input part of the AC power in the power conversion circuit, a battery sensor (160), a power receiving sensor (180), and a control circuit (150), wherein the power conversion circuit can convert the first AC power (AC1) supplied from the first resonant circuit (110) into a first DC power and supply the first DC power to the battery, and can convert the second DC power supplied from the battery into a second AC power and supply the second AC power to the second resonant circuit, and the control circuit converts the second DC power and supplies the second DC power to the second resonant circuit when the temperature detected by the battery sensor is within a predetermined first range.

## Description

### [Cross-Reference to Related Applications]

The present application is based on and claims the benefit of priority from earlier Japanese Patent Application No. 2023-209740 filed on December 13, 2023, contents of which are incorporated herein by reference.

### [Technical Field]

The present disclosure relates to a power receiving device.

### [Background Art]

A battery may have a suitable temperature for use. For example, a lithium-ion battery is preferably used at temperatures of about 20 degrees Celsius. The lithium-ion battery is prone to degradation when used in low-temperature conditions below approximately 0 degrees Celsius. For this reason, there is a technique for raising the temperature of the battery to a temperature suitable for use. In Patent Literature 1, an AC power supply is connected to a battery serving as a load in a non-contact power supply system. The AC power supply of Patent Literature 1 raises the temperature of the battery by energizing the battery. It should be noted that Patent Literature 1 does not disclose any specific application example of the AC power supply connected to the battery of the non-contact power supply system.

### [Citation List]

### [Patent Literature]

[PTL 1] JP 4081855 B1

### [Summary of the Invention]

However, when adding an AC power supply, there was a problem of increased cost and size for the circuit that raises the temperature of the battery.

The present disclosure can be realized in the following aspects.

According to a first aspect of the present disclosure, there is provided a power receiving device configured to receive a first AC power in a non-contact manner using a magnetic field.

The power receiving device includes: a first resonant circuit including a receiving coil configured to receive the first AC power, the first resonant circuit having a first resonant frequency; a power conversion circuit that converts an AC power and a DC power bidirectionally; a battery that is charged with a first DC power supplied via the power conversion circuit; a second resonant circuit connected to an input part of the AC power in the power conversion circuit, the second resonant circuit having a second resonant frequency different from the first resonant frequency; a battery sensor that measures a temperature of the battery; a power receiving sensor that detects a reception of the first AC power; and a control circuit that controls the power receiving device; wherein the power conversion circuit can convert the first AC power supplied from the first resonant circuit into the first DC power and supply the first DC power to the battery by controlling the power conversion circuit in accordance with the first resonant frequency, and can convert the second DC power supplied from the battery into a second AC power and supply the second AC power to the second resonant circuit by controlling the power conversion circuit in accordance with the second resonant frequency; the control circuit performs the conversion of the second DC power and the supply of the second DC power to the second resonant circuit when the power receiving sensor is not receiving the first AC power and the temperature detected by the battery sensor is within a predetermined first range; and the control circuit does not perform the conversion of the second DC power and the supply of the second DC power to the second resonant circuit when the power receiving sensor is not receiving the first AC power and the temperature detected by the battery sensor is within a second range which is higher than the predetermined first range.

In such a configuration, when the battery is not receiving the first AC power and the battery temperature is within the first range, the power conversion circuit converts power between the battery and the second resonant circuit. The temperature of the battery is raised when the battery is energized. That is, the power receiving device according to the present disclosure can control the temperature rise of the battery by the power conversion circuit. For example, when the second resonant circuit is configured only by a reactor and a capacitor, the power receiving device of the present disclosure can be configured more simply than when an AC power supply is used to raise the temperature of the battery. In addition, the power receiving device of the present disclosure does not radiate a magnetic field from the power receiving coil by raising the temperature at the second resonant frequency different from the first resonant frequency of the first resonant circuit configured to receive power. Therefore, the power receiving device according to the present disclosure can prevent an increase in cost and size of the circuit that raises the temperature of the battery.

According to a second aspect of the present disclosure, there is provided a power receiving device configured to receive AC power in a non-contact manner using a magnetic field.

The power receiving device includes: a resonant circuit including a receiving coil configured to receive the AC power; a power conversion circuit that converts the AC power into a DC power; a battery that charges the DC power; a smoothing capacitor connected in parallel between the power conversion circuit and the battery; a switch connected in series to the smoothing capacitor; a battery sensor that measures a temperature of the battery; and a control circuit that controls the power receiving device; wherein the control circuit turns the switch to an off state when the battery sensor detects a first temperature that is in a predetermined first range of temperature; and the control circuit turns the switch to an on state when the battery sensor detects a second temperature that is in a second range which is higher than the predetermined first range.

With such a configuration, the power receiving device of the present disclosure smoothes the current flowing through the battery by the smoothing capacitor when the switch is in the on state. The power receiving device of the present disclosure does not smooth the current flowing through the battery when the switch is in the off state. That is, when the switch is in the off state, a current containing frequency component of AC power flows through the battery. When a current including a frequency component is passed through the battery, the battery temperature is raised more than when a current not including a frequency component is passed through the battery. Therefore, the power receiving device of the present disclosure has a simpler configuration than a configuration in which an AC power supply is used to raise the temperature of the battery, by adding only a switch to the smoothing capacitor. That is, the power receiving device according to the present disclosure can prevent an increase in cost and size of the circuit that raises the temperature of the battery.

### [Brief Description of the Drawings]

The above features of the present disclosure will be made clearer by the following detailed description, given referring to the appended drawings. In the accompanying drawings:
Fig. 1 shows an explanatory diagram of a configuration of a non-contact power supply system according to a first embodiment;
Fig. 2 shows an explanatory diagram of an operation of a power receiving device charging a battery;
Fig. 3 shows another explanatory diagram of an operation of the power receiving device charging the battery;
Fig. 4 shows an explanatory diagram of an operation of the power receiving device raising the temperature of the battery;
Fig. 5 shows another explanatory diagram of an operation of the power receiving device raising the temperature of the battery;
Fig. 6 shows a flowchart of a control method for the power receiving device; and
Fig. 7 is an explanatory diagram of a non-contact power supply system according to a second embodiment.

### [Description of the Embodiments]

### A. First Embodiment:

### A-1. Device Configuration:

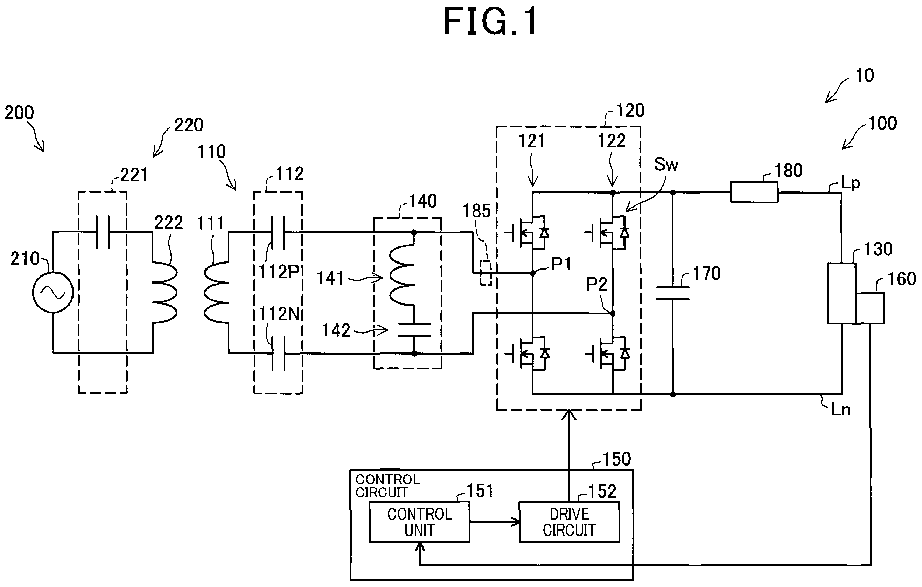

A non-contact power supply system 10 shown in Fig. 1 supplies power to a battery 130 in a non-contact manner using a magnetic field. The non-contact power supply system 10 includes a power transmitting device 200 and a power receiving device 100. The non-contact power supply system 10 supplies power from the power transmitting device 200 to the power receiving device 100 in a non-contact manner. The non-contact power supply system 10 supplies power contactlessly to, for example, a battery 130 mounted on a vehicle.

The power transmitting device 200 supplies AC power to the power receiving device 100 in a non-contact manner using the magnetic field. The power transmitting device 200 includes an AC power supply device 210 and a power transmitting resonant circuit 220.

The AC power supply device 210 supplies AC power of a predetermined operating frequency to the power transmitting resonant circuit 220. The AC power supply device 210 includes a power supply circuit and a power transmission circuit. The power supply circuit may be, for example, an AC/DC converter circuit, which converts AC power supplied from a system power supply into DC power. The power transmission circuit is an inverter that converts DC power supplied from the power supply circuit into AC power at an operating frequency. The operating frequency may be, for example, 85 kHz, which is set using a predetermined power transmission frequency regulated by the Radio Law and the like. Note that the operating frequency is also a frequency corresponding to a resonant frequency of the power transmitting resonant circuit 220, which will be described later.

The power transmitting resonant circuit 220 is magnetically coupled to a power receiving coil 111 in a resonant state. The power transmitting resonant circuit 220 includes a power transmitting coil 222 and a power transmitting resonant capacitor 221 connected in series to the power transmitting coil 222.

The power transmitting resonant capacitor 221 undergoes resonance the power transmitting resonant circuit 220 with AC power at an operating frequency in a state where the power transmitting coil 222 and the power receiving coil 111 are magnetically coupled. That is, the capacitance of the power transmitting resonant capacitor 221 is set so that the operating frequency of the AC power supply device 210 and the resonant frequency of the power transmitting resonant circuit 220 approximately match in a state where the power transmitting coil 222 and the power receiving coil 111 are magnetically coupled.

The power transmitting coil 222 generates a magnetic field according to the operating frequency of the AC power supply device 210. In addition, the power transmitting coil 222 is magnetically coupled to the power receiving coil 111 to transmit AC power to the power receiving coil 111. That is, the power transmitting coil 222 transmits power in a non-contact manner by utilizing the electromagnetic induction phenomenon.

The power receiving device 100 receives AC power from the power transmitting device 200 in a non-contact manner using the magnetic field. The AC power received by the power receiving coil 111 included in the power receiving resonant circuit 110 is referred to as first AC power AC1. The power receiving device 100 includes a power receiving resonant circuit 110, a power conversion circuit 120, a battery 130, a temperature-raising circuit 140, a control circuit 150, a battery sensor 160, a smoothing capacitor 170, and a power receiving sensor 180.

The power receiving resonant circuit 110 includes a power receiving coil 111 and a power receiving resonant capacitor 112 connected in series to the power receiving coil 111. The power receiving resonant circuit 110 has a first resonant frequency. Note that in the present specification, the power receiving resonant circuit 110 is also referred to as a first resonant circuit 110.

The power receiving coil 111 is magnetically coupled to the power transmitting coil 222 by receiving the magnetic field generated by the power transmitting coil 222. The power receiving coil 111 receives the magnetic field generated by the power transmitting coil 222 when used in a state where the power receiving coil 111 faces the power transmitting coil 222. As a result, the power receiving coil 111 receives the first AC power AC1 in a non-contact manner.

The power receiving resonant capacitor 112 undergoes resonance the power receiving resonant circuit 110 with the first AC power AC1 in a state where the power receiving coil 111 and the power transmitting coil 222 are magnetically coupled. That is, the capacitance of the receiving resonant capacitor 112 is set so that when the frequency of the first AC power AC1 and the first resonant frequency of the power receiving resonant circuit 110 approximately match in a state where the transmitting coil 222 and the receiving coil 111 are magnetically coupled.

In the present embodiment, the power receiving resonant capacitor 112 includes a first capacitor 112P on the positive side and a second capacitor 112N on the negative side. Common mode noise can be suppressed from occurring by placing resonant capacitors on both the positive and the negative sides.

The temperature-raising circuit 140 is used to raise the temperature of the battery 130. The function of the temperature-raising circuit 140 will be described in detail later. The temperature-raising circuit 140 is composed of a reactor 141 and a capacitor 142 connected in series. The temperature-raising circuit 140 has a second resonant frequency that is higher than the first resonant frequency of the power receiving resonant circuit 110. The second resonant frequency may be five times greater than the first resonant frequency, for example. That is, the temperature-raising circuit 140 has the second resonant frequency that is different from the first resonant frequency of the power receiving resonant circuit 110. In the present specification, the temperature-raising circuit 140 is also referred to as a second resonant circuit 140.

The temperature-raising circuit 140 is connected in parallel between the power receiving resonant circuit 110 and the power conversion circuit 120. That is, the temperature-raising circuit 140 is connected to an output part of the power receiving resonant circuit 110 and is connected to an input part of the AC power in the power conversion circuit 120.

The power conversion circuit 120 converts AC power and DC power bidirectionally. More specifically, the power conversion circuit 120 is a full-bridge circuit that uses four MOSFETs (metal-oxide-semiconductor field-effect transistors) as switching elements. The power conversion circuit 120 includes two leg circuits, namely, a first leg circuit 121 and a second leg circuit 122. A switch Sw is driven by receiving a voltage at its gate in response to a command from the control circuit 150. In the present specification, the power conversion circuit 120 is also referred to as a synchronous rectification circuit 120.

In the leg circuit, two switches Sw are connected in series. In addition, the leg circuit connects a positive line Lp and a negative line Ln of the DC power. One of output terminals of the temperature-raising circuit 140 is connected between the two switches Sw of the leg circuit. That is, an input terminal of the power conversion circuit 120 is located between the two switches Sw of the leg circuit. Note that regarding the input terminals of the power conversion circuit 120, the leg circuit having a terminal P1 is the first leg circuit 121. The leg circuit having a terminal P2 is the second leg circuit 122.

As described above, the power conversion circuit 120 converts AC power and DC power bidirectionally. The conversion by the power conversion circuit 120 will be described in detail later.

The smoothing capacitor 170 is connected in parallel between an output of the power conversion circuit 120 and the battery 130. The smoothing capacitor 170 smoothes the DC current and the DC voltage supplied to the battery 130.

The power receiving sensor 180 detects the reception of the first AC power AC1. The power receiving sensor 180 detects the current at the output part of the power conversion circuit 120 to detect the reception of the first AC power AC1. More specifically, the power receiving sensor 180 detects the current flowing to the battery 130 between the output part of the power conversion circuit 120 and the battery 130. That is, the power receiving sensor 180 is a current sensor that measures the value of the current of DC power.

The battery 130 is charged by a first DC power DC1 supplied via the power conversion circuit 120. Further, the battery 130 outputs the stored power as a second DC power DC2. The function of the battery 130 will be described in detail later.

The battery 130 may be, for example, a lithium-ion battery. The lithium-ion battery is prone to degradation when used in low-temperature conditions below approximately 0 degrees Celsius. The lithium-ion battery is preferably used at temperatures of about 20 degrees Celsius. The temperature raise of the battery 130 by the temperature-raising circuit 140 is to raise the temperature of the battery 130 to a temperature suitable for use.

The battery sensor 160 measures the temperature of the battery 130. The battery sensor 160 measures the temperature of cells of the lithium-ion battery if the battery 130 is a lithium-ion battery, for example. The battery sensor 160 is connected to the control circuit 150. The temperature obtained by the battery sensor 160 is output to the control circuit 150.

The control circuit 150 controls the power receiving device 100. The control circuit 150 includes a control unit 151 and a drive circuit 152.

The drive circuit 152 drives the switches Sw. More specifically, the drive circuit 152 outputs the power required to drive the switches Sw in response to a command from the control unit 151. The drive circuit 152 is connected to the gates of all the switches Sw in the power conversion circuit 120. That is, the drive circuit 152 drives the switches Sw by applying gate voltages required for turning the switches Sw on and off to the gates of the switches Sw. It should be noted that in Fig. 1, connections between the drive circuit 152 and the gates are omitted to facilitate understanding of the technology.

The control unit 151 generates a signal that controls the on/off operation of the switches Sw. The control unit 151 may be mainly composed of, for example, a microcomputer, and includes a CPU, a ROM, a RAM, and the like (not shown). The control unit 151 is connected to the battery sensor 160. The control by the control unit 151 will be described in detail later.

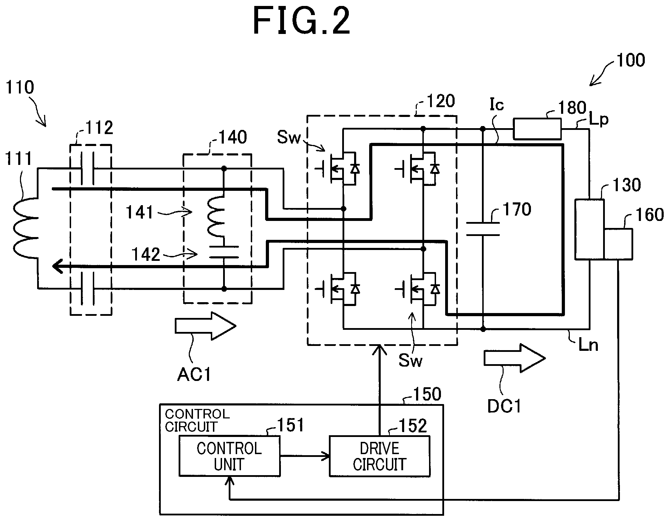

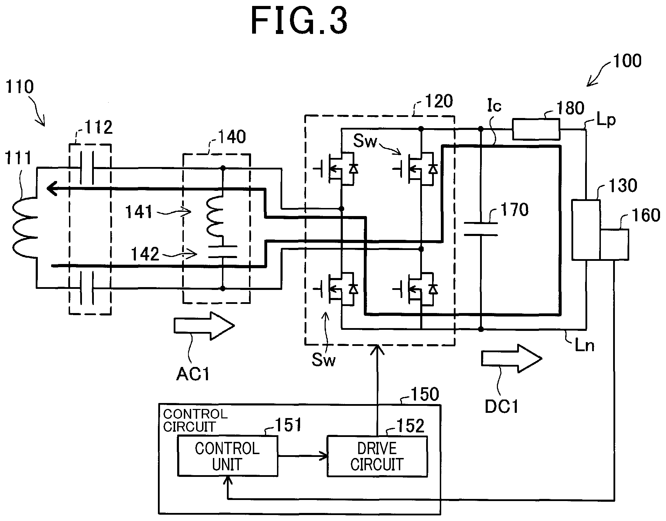

A-2. Charging and Raising the Temperature of the Battery by the Power Receiving Device:
A method for charging the battery 130 in the power receiving device 100 will be described with reference to Figs. 2 and 3. Note that in order to facilitate understanding of the technology, the power transmitting device 200 is omitted from illustration in Figs. 2 and 3. The power receiving device 100 receives the first AC power AC1 through the power receiving coil 111. An arrow AC1 in Fig. 2 indicates the direction in which the first AC power AC1 is supplied.

The power conversion circuit 120 performs rectification according to the first resonant frequency. An arrow Ic in Fig. 2 represents a positive current flow in one cycle of the first AC power AC1. An arrow Ic in Fig. 3 represents a negative current flow in one cycle of the first AC power AC1. That is, the power conversion circuit 120 rectifies the current of the first AC power AC1 of the first resonant frequency via the switches Sw in each of the two leg circuits. As a result, the first AC power AC1 is converted into the first DC power DC1. An arrow DC1 in Fig. 2 indicates the direction in which the first DC power DC1 is supplied. The battery 130 is charged with the first DC power DC1.

That is, by controlling the power conversion circuit 120 according to the first resonant frequency, the power conversion circuit 120 can convert the first AC power AC1 supplied from the first resonant circuit 110 into the first DC power DC1 and supply it to the battery 130.

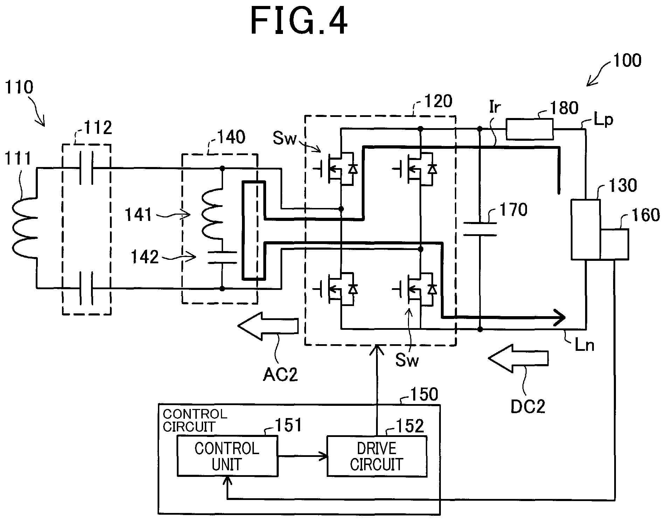

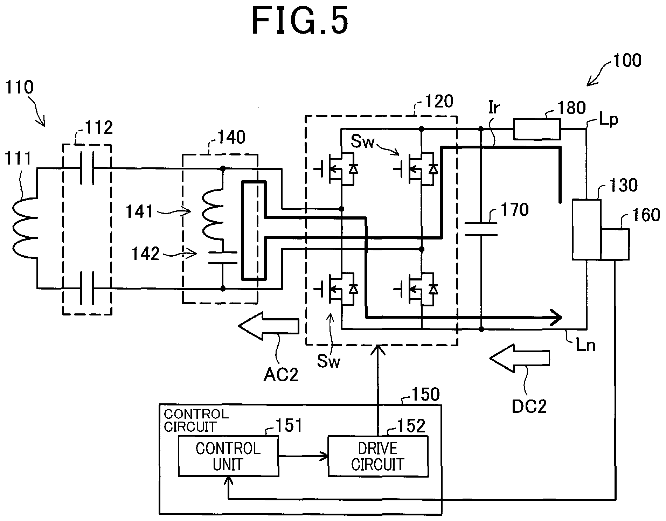

A method for raising the temperature of the battery 130 in the power receiving device 100 will be described with reference to Figs. 4 and 5. Similar to Figs. 2 and 3, the power transmitting device 200 is not shown in Figs. 4 and 5. Note that the temperature of the battery 130 is raised in a state where the first AC power AC1 is not being received. The battery 130 outputs the stored power as the second DC power DC2. An arrow DC2 in Figs. 4 and 5 indicates the direction in which the second DC power DC2 is supplied.

The power conversion circuit 120 converts the power in accordance with the second resonant frequency. A temperature-raising current Ir indicated by an arrow in Fig. 4 is the flow of current output from the battery 130, and represents the flow when the second AC power AC2 is a positive current. The temperature-raising current Ir indicated by an arrow in Fig. 5 is the flow of current output from the battery 130, and represents the flow when the second AC power AC2 is a negative current. The temperature-raising circuit 140 undergoes resonance at the second resonant frequency. Therefore, the power conversion circuit 120 operates the switches Sw at a drive frequency corresponding to the second resonant frequency. That is, the power conversion circuit 120 converts the second DC power DC2 into the second AC power AC2 according to the second resonant frequency via the switches Sw that are driven at the drive frequency corresponding to the second resonant frequency. Therefore, the second AC power AC2 is supplied to the temperature-raising circuit 140. Since the second AC power AC2 corresponding to the second resonant frequency is not supplied to the power receiving resonant circuit 110 having the first resonant frequency, the power receiving coil 111 does not radiate a magnetic field.

Note that the temperature-raising circuit 140 does not include a resistance element and therefore does not consume power. Therefore, the second AC power AC2 supplied to the temperature-raising circuit 140 returns to the battery 130 during one cycle of the second AC power AC2. The current returning to the battery 130 flows in the opposite direction to the direction of the temperature-raising current Ir.

That is, the power conversion circuit 120 can convert the second DC power DC2 supplied from the battery 130 into second AC power AC2 and supply it to the temperature-raising circuit 140 by controlling the power conversion circuit 120 corresponding to the second resonant frequency.

### A-3. Control Method of Power Receiving Device:

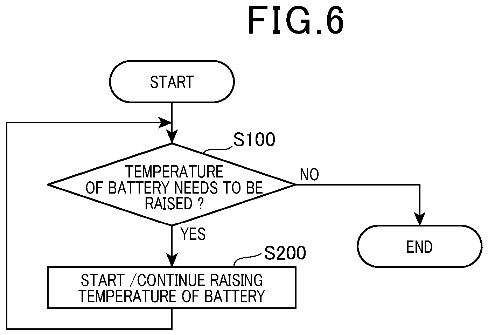

A control method for the power receiving device 100 will be described with reference to Fig. 6. The control circuit 150 detects the reception of the first AC power AC1 by the power receiving sensor 180. Further, the control circuit 150 acquires the temperature of the battery 130 from the battery sensor 160. The control circuit 150 may start the process, for example, when the temperature of the battery 130 is acquired, on the condition that the first AC power AC1 is not being received.

In step S100 of Fig. 6, the control circuit 150 determines whether the temperature of the battery 130 needs to be raised. More specifically, when the temperature detected by the battery sensor 160 is within a predetermined first range, the control circuit 150 advances the process to step S200. The control circuit 150 ends the process when the temperature detected by the battery sensor 160 is within a second range that is higher than the first range. The second range being higher than the first range means that a lower limit of the second range is higher than an upper limit of the first range. For example, the first range of temperatures may be a range of temperatures below 0 degrees Celsius for a lithium-ion battery. The second range is a range equal to or more than 0 degrees Celsius.

In step S200 of Fig. 6, the control circuit 150 starts or continues raising the temperature of the battery 130. Specifically, the control circuit 150 converts the second DC power DC2 and supplies it to the temperature-raising circuit 140. That is, the control circuit 150 controls the power conversion circuit 120 in accordance with the second resonant frequency, thereby converting the second DC power DC2 into the second AC power AC2 and supplying it to the temperature-raising circuit 140, as shown in Figs. 4 and 5. The temperature of the battery 130 is raised when a current is applied to the battery 130. If the temperature raise is already in progress, the control circuit 150 continues the temperature raise. After the temperature of the battery 130 has been raised, the control circuit 150 returns the process to step S100. The control circuit 150 determines whether a temperature raise is necessary based on the raised temperature of the battery 130, thereby raising the temperature of the battery 130 to a temperature suitable for use of the battery 130.

In such a configuration, when the battery 130 is not receiving the first AC power AC1 and the temperature of the battery 130 is within the first range, the power conversion circuit 120 converts power between the battery 130 and the second resonant circuit 140. The temperature of the battery 130 is raised when the battery 130 is energized. That is, the power receiving device 100 according to the present disclosure can control the temperature raise of the battery 130 by the power conversion circuit 120. For example, when the second resonant circuit 140 is configured only by the reactor 141 and the capacitor 142, the power receiving device 100 according to the present disclosure has a simpler configuration than when the AC power supply is used to raise the temperature of the battery 130. Further, the power receiving device 100 of the present disclosure does not radiate a magnetic field from the power receiving coil 111 by raising the temperature at the second resonant frequency different from the first resonant frequency of the first resonant circuit 110 configured to receive power. Therefore, the power receiving device 100 according to the present disclosure can prevent cost and size of the circuit that raises the temperature of the battery 130 from increasing.

In addition, since the second resonant frequency is greater than the first resonant frequency, the power receiving device 100 of the present disclosure can raise the temperature of the battery 130 that is less likely to deteriorate in the case of high-frequency current, such as a lithium-ion battery, at a frequency that is more suitable for the battery 130. Further, in the power receiving device 100 of the present disclosure, the higher the frequency, the smaller the passive elements such as the reactor 141 and the capacitor 142 that configure the circuit can be made.

### B. Second Embodiment:

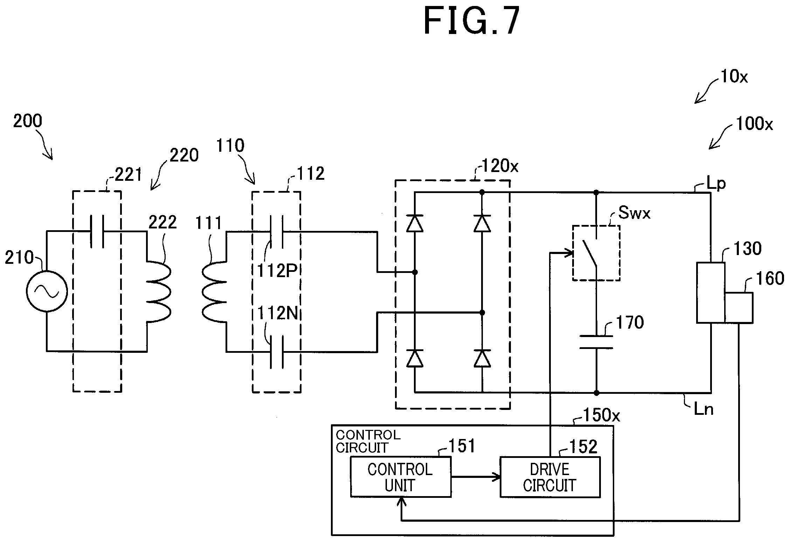

In a non-contact power supply system 10x of the second embodiment shown in Fig. 7, a power receiving device 100x further includes a switch Swx connected in series to a smoothing capacitor 170. The switch Swx may be, for example, a semiconductor relay. A control circuit 150x of the second embodiment controls the switch Swx connected in series to the smoothing capacitor 170. However, the power receiving device 100x of the second embodiment does not include the temperature increasing circuit 140 and the power receiving sensor 180. In addition, the switch Sw in the power conversion circuit 120 of the first embodiment is replaced with a rectifier diode in a power conversion circuit 120x of the second embodiment. That is, the power conversion circuit 120x converts AC power into DC power, however, it does not convert AC power and DC power bidirectionally. Other configurations of the non-contact power supply system 10x of the second embodiment are the same as those of the non-contact power supply system 10 of the first embodiment. It should be noted that in the configuration of the non-contact power supply system 10x of the second embodiment, components that are different from the configuration of the non-contact power supply system 10 of the first embodiment are designated by a reference numeral with an x added to the end.

The processing of the control circuit 150x will be described. The control circuit 150x starts the process when the temperature of a battery 130 is acquired, for example. The control circuit 150x controls the switch Swx to be in an OFF state in response to a battery sensor 160 detecting a first temperature of the battery 130 that is in a predetermined first range. Specifically, the control circuit 150x does not smooth the DC power by the smoothing capacitor 170. As a result, a current called a ripple current or a pulsating current flows through the battery 130. That is, a current containing a frequency component of AC power is passed through the battery 130. The control circuit 150x raises the temperature of the battery 130 until the temperature of the battery 130 reaches a temperature suitable for use of the battery 130.

The control circuit 150x controls the switch Swx to an on state in response to the battery sensor 160 detecting a second temperature that is in a second range which is higher than the first range. That is, the control circuit 150x smoothes DC power output from the power conversion circuit 120x using the smoothing capacitor 170. As a result, a more stable DC current flows through the battery 130 than when DC power is not smoothed by the smoothing capacitor 170. Note that the first and second ranges are the same as those in the first embodiment.

With this configuration, the power receiving device 100x of the present disclosure smoothes the current flowing through the battery 130 by the smoothing capacitor 170 when the switch Swx is in the on state. The power receiving device 100x according to the present disclosure does not smooth the current flowing through the battery 130 when the switch Swx is in the off state. That is, when the switch Swx is in the off state, a current containing a frequency component of AC power flows through the battery 130. When a current including a frequency component is passed through the battery 130, the temperature of the battery 130 is raised more than when a current not including a frequency component is passed through the battery 130. As a result, the power receiving device 100x of the present disclosure has a simpler configuration than a configuration in which an AC power supply is used to raise the temperature of the battery 130, by adding only the switch Swx to the smoothing capacitor 170. That is, the power receiving device 100x according to the present disclosure can prevent an increase in cost and size of the circuit that raises the temperature of the battery 130.

In addition, since there is no need to smooth the current used to raise the temperature of the battery 130, the power receiving device 100x of the present disclosure can be designed more easily than in a configuration in which the current used to raise the temperature of the battery 130 is smoothed.

### C. Modification 1:

In the first embodiment, the power receiving device 100 may further include a current sensor 185 at the input part of the power conversion circuit 120. The current sensor 185 is shown by a dashed line in Fig. 1. The control circuit 150 controls the power conversion circuit 120 based on the detection value of the current sensor 185 so that the temperature-raising current Ir based on the second resonant frequency becomes a predetermined reference current. The predetermined reference current may be, for example, a current value based on the rated current of the battery 130. Note that the current sensor 185 may be the power receiving sensor 180 at the output part of the power conversion circuit 120 in the first embodiment.

More specifically, the control circuit 150 adjusts the temperature-raising current Ir to the reference current in the following manner.

The control circuit 150 may adjust the temperature-raising current Ir by providing a period in which the battery 130 and the temperature-raising circuit 140 are disconnected by turning off the switch Sw of the power conversion circuit 120 during one cycle of the second AC power AC2. That is, the control circuit 150 can adjust the temperature-raising current Ir by adjusting the ratio of the period during which the battery 130 and the temperature-raising circuit 140 are disconnected to the period during which the battery 130 and the temperature-raising circuit 140 are connected in one cycle of the second AC power AC2.

By adopting such a configuration, the power receiving device 100 of the present disclosure can control the temperature rise of the battery 130 without adding a circuit for adjusting the temperature-raising current Ir.

### D. Modification 2:

In the second embodiment, all of the rectifying elements of the power conversion circuit 120x are configured by rectifying diodes. However, it is sufficient for the power conversion circuit 120x to be able to convert AC power into DC power. That is, in the power conversion circuit 120x, some of the rectifying elements may be switches, or all of the rectifying elements may be configured as switches as in the first embodiment.

### E. Modification 3:

(1) In the above embodiments, the power receiving resonant circuit 110 includes the power receiving resonant capacitor 112 as a resonant capacitor connected in series to the power receiving coil 111. However, the power receiving resonant circuit 110 may include a resonant capacitor connected in parallel to the power receiving coil 111. That is, the power receiving resonant circuit 110 may be a parallel resonant circuit.
(2) In the above embodiments, the temperature-raising circuit 140 has the second resonant frequency that is greater than the first resonant frequency. However, the temperature-raising circuit 140 may have a second resonant frequency that is lower than the first resonant frequency. For example, the second resonant frequency may be one-fifth the frequency of the first resonant frequency.
(3) In the above embodiments, the switch Sw of the power conversion circuit 120 is a MOSFET. However, the switch Sw of the power conversion circuit 120 may be another switching element. The switch Sw may be, for example, a BJT (bipolar junction transistor) or an IGBT (insulated gate bipolar transistor).
(4) In the above embodiments, the power receiving sensor 180 is a current sensor that measures the current value of DC power.

The power receiving sensor 180 may be another sensor. For example, the power receiving sensor 180 may be a voltage sensor that measures the voltage of DC power. In addition, the power receiving sensor 180 may be configured with a plurality of sensors. For example, the power receiving sensor 180 may be configured with a sensor that detects the reception of AC power and a sensor that detects the power consumption of the battery 130 using DC power.

(5) In the above embodiments, the battery 130 is a lithium-ion battery as an example. However, the battery 130 may be another battery 130. The battery 130 may be a lead battery, a nickel-metal hydride battery, or the like.

(6) In the first embodiments, the power conversion circuit 120 drives the switch Sw in accordance with the first resonant frequency to rectify the first AC power AC1. However, the power conversion circuit 120 does not need to drive the switch Sw according to the first resonant frequency in order to rectify the first AC power AC1. The first AC power AC1 may be rectified only by the parallel diode when the switch Sw of the power conversion circuit 120 includes a parallel diode.

The present disclosure is not limited to the above-described embodiments and modifications, and can be realized in various configurations without departing from the scope of the present disclosure. For example, the technical features in the embodiments and variants corresponding to the technical features in each form described in the Summary of the Invention column can be replaced or combined as appropriate in order to solve some or all of the above-mentioned problems or to achieve some or all of the above-mentioned effects. Furthermore, if a technical feature is not described as essential in the present specification, it may be deleted as appropriate.

### F. Other Aspects:

The features of the present disclosure are as follows:
(Aspect 1) A power receiving device (100) configured to receive a first AC power (AC1) in a non-contact manner using a magnetic field, the power receiving device including:
   a first resonant circuit (110) including a receiving coil (111) configured to receive the first AC power, the first resonant circuit having a first resonant frequency;
   a power conversion circuit (120) that converts an AC power and a DC power bidirectionally;
   a battery (130) that is charged with a first DC power (DC1) supplied via the power conversion circuit;
   a second resonant circuit (140) connected to an input part of the AC power in the power conversion circuit, the second resonant circuit having a second resonant frequency different from the first resonant frequency;
   a battery sensor (160) that measures a temperature of the battery;
   a power receiving sensor (180) that detects a reception of the first AC power; and a control circuit (150) that controls the power receiving device; wherein
   the power conversion circuit can convert the first AC power supplied from the first resonant circuit into the first DC power and supply the first DC power to the battery by controlling the power conversion circuit in accordance with the first resonant frequency, and can convert the second DC power (DC2) supplied from the battery into a second AC power (AC2) and supply the second AC power to the second resonant circuit by controlling the power conversion circuit in accordance with the second resonant frequency;
   the control circuit performs the conversion of the second DC power and the supply of the second DC power to the second resonant circuit when the power receiving sensor is not receiving the first AC power and the temperature detected by the battery sensor is within a predetermined first range; and
   the control circuit does not perform the conversion of the second DC power and the supply of the second DC power to the second resonant circuit when the power receiving sensor is not receiving the first AC power and the temperature detected by the battery sensor is within a second range which is higher than the predetermined first range.
(Aspect 2) The power receiving device according to aspect 1, wherein
   the second resonant frequency is greater than the first resonant frequency.
(Aspect 3) The power receiving device according to aspect 1, the power receiving device further including:
   a current sensor at the input or an output of the power conversion circuit; and
   the control circuit controls the power conversion circuit based on a detection value of the current sensor so that a temperature-raising current based on the second resonant frequency becomes a predetermined reference current.
(Aspect 4) A power receiving device (100x) configured to receive an AC power in a non-contact manner using a magnetic field, the power receiving device including:
   a resonant circuit (110) including a receiving coil (111) configured to receive the AC power;
   a power conversion circuit (120x) that converts the AC power into a DC power;
   a battery (130) that charges the DC power;
   a smoothing capacitor (170) connected in parallel between the power conversion circuit and the battery;
   a switch (Swx) connected in series to the smoothing capacitor;
   a battery sensor (160) that measures a temperature of the battery; and
   a control circuit (150x) that controls the power receiving device; wherein
   the control circuit turns the switch to an off state when the battery sensor detects a first temperature that is in a predetermined first range of temperature; and
   the control circuit turns the switch to an on state when the battery sensor detects a second temperature that is in a second range which is higher than the predetermined first range.

## Claims

1. A power receiving device (100) configured to receive a first AC power (AC1) in a non-contact manner using a magnetic field, the power receiving device comprising:
a first resonant circuit (110) including a receiving coil (111) configured to receive the first AC power, the first resonant circuit having a first resonant frequency;
a power conversion circuit (120) that converts an AC power and a DC power bidirectionally;
a battery (130) that is charged with a first DC power (DC1) supplied via the power conversion circuit;
a second resonant circuit (140) connected to an input part of the AC power in the power conversion circuit, the second resonant circuit having a second resonant frequency different from the first resonant frequency;
a battery sensor (160) that measures a temperature of the battery;
a power receiving sensor (180) that detects a reception of the first AC power; and
a control circuit (150) that controls the power receiving device; wherein
the power conversion circuit can convert the first AC power supplied from the first resonant circuit into the first DC power and supply the first DC power to the battery by controlling the power conversion circuit in accordance with the first resonant frequency, and can convert the second DC power (DC2) supplied from the battery into a second AC power (AC2) and supply the second AC power to the second resonant circuit by controlling the power conversion circuit in accordance with the second resonant frequency;
the control circuit performs the conversion of the second DC power and the supply of the second DC power to the second resonant circuit when the power receiving sensor is not receiving the first AC power and the temperature detected by the battery sensor is within a predetermined first range; and
the control circuit does not perform the conversion of the second DC power and the supply of the second DC power to the second resonant circuit when the power receiving sensor is not receiving the first AC power and the temperature detected by the battery sensor is within a second range which is higher than the predetermined first range.

2. The power receiving device according to claim 1, wherein
the second resonant frequency is greater than the first resonant frequency.

3. The power receiving device according to claim 1, the power receiving device further comprising:
a current sensor (185) at the input or an output of the power conversion circuit; and
the control circuit controls the power conversion circuit based on a detection value of the current sensor so that a temperature-raising current based on the second resonant frequency becomes a predetermined reference current.

4. A power receiving device (100x) configured to receive an AC power in a non-contact manner using a magnetic field, the power receiving device comprising:
a resonant circuit (110) including a receiving coil (111) configured to receive the AC power;
a power conversion circuit (120x) that converts the AC power into a DC power;
a battery (130) that charges the DC power;
a smoothing capacitor (170) connected in parallel between the power conversion circuit and the battery;
a switch (Swx) connected in series to the smoothing capacitor;
a battery sensor (160) that measures a temperature of the battery; and
a control circuit (150x) that controls the power receiving device; wherein
the control circuit turns the switch to an off state when the battery sensor detects a first temperature that is in a predetermined first range of temperature; and
the control circuit turns the switch to an on state when the battery sensor detects a second temperature that is in a second range which is higher than the predetermined first range.
